(19) Europäisches Patentamt
European Patent Office
Office européen des brevets

(11) **EP 3 712 735 A1**

(12) **DEMANDE DE BREVET EUROPEEN**

(43) Date de publication:
**23.09.2020 Bulletin 2020/39**

(51) Int Cl.:
*G05B 23/02* (2006.01)　*G06Q 50/06* (2012.01)
*C02F 1/00* (2006.01)　*F04D 15/02* (2006.01)

(21) Numéro de dépôt: **19305357.6**

(22) Date de dépôt: **22.03.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(72) Inventeurs:
- LEFRANC, Marie
  **78350 Les Loges-En-Josas (FR)**
- BOURGEOIS, Thomas
  **78350 Les Loges-En-Josas (FR)**

(74) Mandataire: **Mellul-Bendelac, Sylvie Lisette**
**L'Air Liquide**
**Direction des Services**
**De la Propriété Intellectuelle**
**75, Quai d'Orsay**
**75321 Paris Cedex 07 (FR)**

(71) Demandeur: **L'AIR LIQUIDE, SOCIETE ANONYME POUR L'ETUDE ET L'EXPLOITATION DES PROCEDES GEORGES CLAUDE**
**75007 Paris (FR)**

(54) **MÉTHODE DE DÉTECTION D'ANOMALIES DANS UNE INSTALLATION DE TRAITEMENT DES EAUX**

(57) Une méthode d'opération d'une installation de traitement des eaux, qui comporte une phase de détection d'anomalies dans le fonctionnement de la station, se caractérisant en ce que la phase de détection d'anomalies comporte la mise en oeuvre des mesures suivantes :
- on dispose de données représentatives de l'état de fonctionnement de la station, données fournies par des capteurs installés à des endroits choisis de la station elle-même ou au niveau des canalisations d'entrée ou de sortie de la station,
- on dispose également le cas échéant de données additionnelles situées dans le groupe formé par :
i) des données de dates/périodes durant lesquelles le fonctionnement de la station est suivi ;
j) des données représentatives de l'état de la machine amont produisant les effluents à traiter dans la station ;
k) des données météo caractérisant les conditions climatiques dans lesquelles le fonctionnement de la station est suivi ;
- on dispose d'un système d'acquisition et de traitement de ces données, muni d'un algorithme de traitement de ces données, apte à réaliser les déterminations suivantes :
a) à réaliser une phase d'apprentissage durant laquelle le système calcule les paramètres d'une loi de probabilité pour l'ensemble des capteurs ainsi que le cas échéant desdites données additionnelles ;
b) à réaliser une phase d'utilisation de l'algorithme où le système insère les valeurs qui sont lues en temps réel par les capteurs dans l'algorithme, pour calculer une densité de probabilité pour l'ensemble des capteurs et selon le résultat de cette densité, si cette probabilité est basse, conclure que les capteurs prennent des valeurs très différentes de celles qu'ils prenaient lors de la phase d'apprentissage, et pointer alors une anomalie.

EP 3 712 735 A1

**Figure 1**

**Description**

La présente invention concerne le domaine du traitement des eaux.

Et plus précisément la présente invention s'intéresse à la détection d'anomalies de fonctionnement de stations de traitement des eaux.

On sait à titre illustratif que les anomalies détectées peuvent être les suivantes :

- La détection de casses ou de pannes d'équipements ou d'instruments.
- La détection d'un phénomène anormal par exemple un moussage.
- La détection de changements opératoires (par exemple un changement d'opérateur).
- La détection d'un changement de nature ou de quantité des effluents à traiter entrant dans le procédé.
- ...etc..

On le conçoit, cette détection d'anomalie peut être intéressante à plus d'un titre :

- d'une part, il est difficile (voire impossible) pour l'opérateur sur site de suivre tous les paramètres de la station en temps réel. Un algorithme de détection d'anomalies couplé avec des mesures pertinentes de différents paramètres de la station serait alors tout particulièrement avantageux pour permettre d'alerter très rapidement l'opérateur d'un problème sur la station, problème qu'il peut alors adresser dans les meilleurs délais.
- d'autre part, les fournisseurs d'équipements et de consommables sont le plus souvent non présents sur la station. Ainsi, un tel outil pourrait être extrêmement intéressant pour les alerter en cas de panne d'un des équipements (ou de déviation par rapport à un fonctionnement « normal » annonciatrice d'une panne) ou encore les prévenir en cas de surconsommation (ou utilisation non optimale) de l'un des consommables (par exemple un gaz), et pour leur permettre de suivre en temps réel la probabilité d'anomalie de la station (et alerter et aider si nécessaire à distance l'opérateur sur site pour l'optimisation de son procédé).

Les solutions proposées à l'heure actuelle dans cette industrie ou dans la littérature ne prônent pas l'utilisation de capteurs, elles prônent la réalisation d'analyses laboratoires, faites à intervalle régulier, par exemple toutes les semaines ou tous les mois, pour permettre de détecter une anomalie. On conçoit qu'alors la fréquence de détection d'anomalies est basse, cette méthode ne peut que faire rater bon nombre d'événements importants se produisant dans la station.

Une autre solution déjà évoquée, et sans doute un peu plus pertinente, consiste à la fois à suivre des analyses en laboratoires et les données fournies par des capteurs installés sur site donnant des mesures très régulièrement (par exemple toutes les 15 minutes).

Le problème dans ce cas est que l'opérateur a à sa disposition en général un très grand nombre de données du fait de nombreux capteurs, capteurs qui ont beaucoup de variabilité, et suivre tous ces capteurs indépendamment les uns des autres peut amener à déclencher beaucoup de fausses alarmes tout en ratant les "vraies" anomalies.

A titre illustratif, observée indépendamment des autres mesures, une hausse très importante de la concentration en oxygène peut déclencher une alarme parce que n'étant pas dans la moyenne, alors que cette hausse importante peut être expliquée par une baisse très importante de concentration de polluants dans l'effluent entrant, ce qui n'est pas une anomalie en soi. Dans ce cas on déclencherait une fausse alarme.

De même, une hausse du courant électrique de la pompe permettant l'aération des bassins peut avoir deux causes : une hausse du régime de la pompe (si par exemple on augmente le débit de gaz) ou une panne du moteur. La mesure du courant électrique seule est donc insuffisante pour fournir une alarme fiable, tandis que si elle est couplée avec d'autres mesures comme par exemple la demande en oxygène du bassin d'aération, la concentration en oxygène dissous, ou le débit en oxygène, et grâce à un outil de détection d'anomalie adapté, une alarme fiable peut être générée. Enfin, il est à noter que certaines stations de traitement des eaux s'opèrent de façon très variable en fonction du procédé en amont.

On peut citer par exemple les stations d'épuration des eaux en aval de sites de production pharmaceutiques ou agroalimentaires : la nature de l'effluent va changer de façon drastique d'une production à l'autre, et donc les paramètres mesurés également. Associer les paramètres mesurés sur la station à un type de production amont permet alors de déterminer de façon immédiate si les variations observées sont attribuables à une anomalie ou à un changement dans la production amont. On limite ainsi les fausses alarmes et maximise le nombre d'anomalies correctement détectées.

La présente invention a alors pour objectif de proposer une nouvelle méthode de détection des anomalies se produisant dans une telle installation de traitement d'effluents, méthode qui est basée sur un algorithme.

Comme nous le verrons plus en détails dans ce qui suit, la méthode proposée ici présente plusieurs avantages:

- L'algorithme peut traiter des données de nature très variée, telles que mesures d'un capteur, état d'une machine (en service/arrêtée), numéro de production, données de calibration de capteurs, fichiers d'analyse de laboratoire., chaque donnée d'entrée étant associée à une probabilité d'occurrence ce qui permet l'analyse de scénario complexes.

- L'algorithme permet de traiter un grand nombre de données. Avec l'augmentation attendue du nombre de capteurs et de données disponibles, il est capital d'avoir un outil permettant d'agréger toutes ces données, même en très grand nombre. Le nombre et la nature des données utilisées en entrée n'est pas limité.

- Un modèle descriptif est complexe à mettre en oeuvre, il nécessite des étapes de développement et validation pour chaque configuration de station d'épuration et éventuellement pour chaque mode de fonctionnement. L'algorithme proposé ici est au contraire un outil statistique, il est peu complexe à mettre en oeuvre et ne demande qu'une étape d'apprentissage à la mise en place. Il peut ensuite être enrichi de nouvelles données au fur et à mesure de la vie de la station, par exemple avec l'ajout de nouveaux capteurs ou de nouvelles sources d'informations relatives à la station ou à son environnement.

  - Il permet une analyse complexe en temps réel : en associant un grand nombre de signaux faibles (i.e. de faibles variations de différents paramètres qui ne déclenchent pas d'alertes quand on les regarde séparément les uns des autres) on peut révéler un problème plus important. Une loi de probabilité lie les différents signaux afin de les analyser de façon globale et respecter ainsi la dépendance entre certains événements.

- Peu importe le nombre et la nature des données utilisées, l'algorithme résulte en un seul indicateur qui reflète l'état général de la station : une probabilité. Si cette probabilité est élevée, cela signifie que la combinaison de données remontées dans l'algorithme est très probable ce qui signifie que le fonctionnement est normal. Si la probabilité est faible, cela signifie que soit un unique soit une combinaison de données de l'algorithme ont une probabilité faible d'occurrence et cette faible probabilité d'occurrence alerte sur une anomalie sur la station.

Comme expliqué précédemment, les données d'entrée du modèle peuvent être de nature variée. Il peut s'agir à titre d'exemple :

- de capteurs : les capteurs peuvent être installés à divers endroits de la station par exemple au niveau des équipements (pompes, turbines, ...), ou encore directement dans les bassins d'aération, ou au niveau des canalisations d'entrée ou de sortie de la station... etc....
- de dates : le fonctionnement peut être différent en fonction des saisons (arrêt de la station en été, températures plus froides en moyenne en hiver, ...), du jour de la semaine (pas de production en amont de certaines stations les week-end), ou encore de l'heure (moins d'effluent en entrée de station d'épuration municipale pendant la nuit) etc.... Il peut pour cela être intéressant de corréler les données de la station à l'heure, au jour de la semaine ou à la saison.

  - d'état de la machine amont et de données de production amont : dans ces stations d'épuration d'eaux usées industrielles, la nature des effluents dépend du procédé en amont de la station. Pour cette raison, l'état de la machine en cours d'utilisation au niveau du procédé amont, ou la référence de la production en cours peut expliquer la nature de l'effluent, et donc être corrélé à certaines valeurs mesurées dans la station d'épuration.

- de données météo : des évènements climatiques (pluies abondantes, sécheresse, températures extrêmes) peuvent aussi être utilisés pour compléter la base de données grâce à laquelle l'outil de détection peut fonctionner.

On liste dans ce qui suit des exemples de capteurs pouvant être utilisés :

- Capteur d'oxygène dissous : il peut s'agir d'un capteur électrochimique ou optique, mais on utilisera de préférence un capteur optique. Ce capteur placé dans le bassin d'aération permet une mesure de la concentration d'oxygène dissous. Cette mesure peut être particulièrement pertinente simultanément à une forte aération du bassin, car le taux de croissance pendant l'aération (et de décroissance à l'arrêt de l'aération) de la concentration en oxygène dissous sont respectivement (couplés au débit d'aération) des bons indicateurs du bon fonctionnement des équipements aérations d'une part, et de la demande en oxygène des boues activées dans le bassin d'aération d'autre part.
- Sonde électrochimique tel que des sondes pH, redox, on utilisera de préférence des sondes comportant 3 électrodes afin de compenser l'impact de certains ions interférents, ainsi que des sondes dotées de capteurs de température afin de compenser l'impact de la température. Le temps d'utilisation de la sonde, ainsi que la variation temporelle de la mesure peuvent aussi être suivis car ce sont des indicateurs du bon fonctionnement de la sonde, et donc de la fiabilité de la mesure.
- Sonde à membrane sélective. Ces sondes électrochimiques comportent une membrane perméable pour certaines espèces chimiques seulement, elles permettent donc de mesurer les concentrations d'ammonium, de nitrate, ou autres espèces chimiques que l'on cherche à dégrader dans la station. De même que pour les sondes pH / redox, on préférera des sondes comportant 3 électrodes et une compensation en température.

- Sonde spectrale : Il existe de plus en plus de sondes sur le marché permettant de mesurer la charge organique, la charge azotée ou la quantité de matière en suspension par spectrophotométrie. Plusieurs type de sondes peuvent être utilisés : mesure de l'absorbance à une ou plusieurs longueurs d'onde, mesure du pic de fluorescence sur une plage plus ou moins grande de longueurs d'onde. Dans tous les cas, la mesure optique peut être corrélée à la concentration de pollution organique ou azotée. On préférera des sondes permettant la mesure du spectre d'absorbance sur une plage étendue, permettant ainsi d'une part de compenser l'effet de la turbidité, et d'autre part de construire des corrélations plus robustes. Cette sonde sera avantageusement placée en amont et/ou en aval du bassin d'aération.

- Analyseur en ligne : alternativement, les concentrations de différentes espèces chimiques peuvent être obtenues par des analyseurs en ligne. Dans ce cas, l'analyseur est avantageusement situé à proximité du bassin, et un échantillon est prélevé à intervalle régulier pour analyse.

- Turbidité : Une sonde permettant la mesure de la turbidité peut être utilisée, ou toute autre mesure pouvant être corrélée à la turbidité, ou à la concentration de solides en suspension (lumière rétrodiffusée, lumière diffusée à 60°, lumière absorbée, ...). Cette sonde pourra être placée en amont du bassin d'aération, ou en aval, ou directement dans le bassin d'aération.

- Conductivité : La conductivité est un indicateur assez fiable et facilement mesurable de la qualité de l'eau. Elle peut dans certains cas être corrélée à la demande chimique en oxygène (DCO - dans des eaux municipales par exemple). Elle peut être mesurée par une méthode conductive ou inductive, ou toute autre méthode permettant d'estimer la conductivité. Cette sonde peut être placée dans les canalisations en amont ou aval de la station, ou dans le bassin d'aération directement.

- Débit de gaz : le débit d'oxygène (ou d'air) injecté dans le bassin d'aération peut être suivi. Un débitmètre (de préférence un débitmètre massique thermique) est placé en amont de l'équipement d'injection de gaz dans le bassin.

- Capteur de vibration. Les vibrations sont mesurées sur l'équipement d'injection de gaz dans l'eau. Le capteur est placé préférentiellement au niveau du motoréducteur (ou alternativement au niveau du moteur). Le signal suivi peut être au choix le spectre de vibration, ou une déviation par rapport à un spectre de vibration généré en fonctionnement normal.

- Pince ampérométrique. Cette pince placée au niveau de l'alimentation électrique de l'équipement d'aération permet la mesure du courant du moteur. Cette pince peut être accompagnée d'une mesure de température.

- Débit d'eau ou de boues : Des débitmètres à ultrason ou électromagnétiques peuvent être utilisés en divers points de la station : en amont pour le débit d'effluent entrant, en aval pour le débit d'eau traitée sortant, au niveau de la recirculation des boues...

Cette liste de capteurs n'est bien sûr qu'illustrative des capteurs pouvant être utilisés, nullement exhaustive.

Pour l'algorithme proposé selon la présente invention, tous capteurs permettant de suivre un paramètre ayant un intérêt particulier dans la station d'épuration considérée non cité ci-dessus pourra être ajouté.

Comme signalé précédemment, la présente invention propose de mettre en oeuvre un algorithme pour l'interprétation des données, permettant de calculer quelle est la probabilité que les capteurs donnent la valeur qu'ils affichent. Si cette probabilité est haute, on considère qu'il n'y a pas d'anomalies, si cette probabilité est basse l'algorithme détecte une anomalie.

Plus précisément :

- dans une phase d'entraînement (i.e. de création d'un système expert) : on calcule une loi de probabilité pour l'ensemble des capteurs ;
- dans la phase d'utilisation de l'algorithme : on insère les valeurs qui sont lues par les capteurs dans l'algorithme de calcul de probabilité. Si cette probabilité est basse, cela indique que les capteurs prennent des valeurs très différentes de celles qu'ils prenaient lors de la phase d'apprentissage, l'algorithme détecte, pointe, alors une anomalie.

Mathématiquement on présente deux exemples d'algorithme ci-dessous. Une version simplifiée avec des lois gaussiennes indépendantes et une version plus complexe et plus précise avec une gaussienne multivariée.

Algorithme 1 :

1. Entraînement sur la période de temps $t_1$ à $t_m$ :

a. Choix des données d'entrées $x_j(t)$ , j=1...n, qui pourraient être indicatrices des anomalies. Ex : $x_j$ peuvent être toutes des mesures faites dans la station (par exemple parmi les exemples de capteurs listés ci-dessus).

b. Calcul des paramètres $\mu_1, ... , \mu_n, \sigma_1 ... , \sigma_n$, avec les formules suivantes :

$$\mu_j = \frac{1}{m} \sum_{t_i=t_1}^{t_m} x_j(t_i)$$

$$\sigma_j^2 = \frac{1}{m} \sum_{t_i=t_1}^{t_m} \left(x_j(t_i) - \mu_j\right)^2$$

où $\mu_j$ = moyenne de la variable j sur la période d'entraînement, et $\sigma_j$ = l'écart-type de la variable j sur la période d'entraînement.

2. Utilisation de l'algorithme pour la période de temps t > $t_m$ :

Etant donné un nouveau pas de temps t, calcul de $p(t)$ :

$$p(t) = \prod_{j=1}^{n} p\left(x_j(t); \mu_j, \sigma_j^2\right) = \prod_{j=1}^{n} \frac{1}{\sqrt{2\pi}\sigma_j} exp\, exp \left(-\frac{\left(x_j(t) - \mu_j\right)^2}{2\sigma_j^2}\right)$$

On détecte une anomalie si : $p(t) < \epsilon$

Exemple numérique :

2 variables d'entrée :

- $x_1$, concentration en oxygène dans le bassin
- $x_2$, concentration des polluants en entrée

Sur une période d'entraînement de 3 mois, on calcule :

$$\mu_1 = 2\ g/m^3$$

$$\mu_2 = 100\ g(Carbon)/m^3$$

$$\sigma_1 = 0.3\ g/m^3$$

$$\sigma_2 = 5\ g(Carbon)/m^3$$

On se fixe un seuil minimum d'anomalie à $\epsilon = 10^{-4}$.

Puis sur la période d'utilisation de l'algorithme, on observe les nouvelles valeurs de capteurs suivantes :

- $x_1(t)$ = 2.1 $g/m^3$
- $x_2(t)$ = 96 $g/m^3$

On peut alors calculer la densité de probabilité suivante :

$$p(t) = \prod_{j=1}^{n} \frac{1}{\sqrt{2\pi}\sigma_j} exp\, exp\left(-\frac{\left(x_j(t) - \mu_j\right)^2}{2\sigma_j^2}\right) = 0.072$$

Sur ce premier pas de temps la probabilité est haute, on ne détecte donc pas d'anomalie.
Sur un deuxième pas de temps

- $x_1(t) = 2.7\ g/m^3$
- $x_2(t) = 85\ g/m^3$

$$p(t) = \prod_{j=1}^{n} \frac{1}{\sqrt{2\pi}\sigma_j} exp\, exp\left(-\frac{\left(x_j(t) - \mu_j\right)^2}{2\sigma_j^2}\right) = 7.75\ 10^{-5} < \epsilon$$

Cette deuxième probabilité étant très basse, elle est indicatrice d'une anomalie.
Cette deuxième probabilité étant très basse, elle est indicatrice d'une anomalie.

Algorithme 2 :

1. Entraînement sur la période de temps $t_1$ à $t_m$ :

a. Choix des données d'entrées $x_j(t)$ qui pourraient être indicatrices des anomalies. Ex : $x_j$ peuvent être toutes des mesures faites dans la station (par exemple parmi les exemples de capteurs listés ci-dessus)..
b. Calcul des paramètres $\mu$ et $\Sigma$ avec les formules suivantes : (note : $x$, $\mu$ et $\Sigma$ sont multidimensionnels, dans cette deuxième version)

$$\mu = \frac{1}{m} \sum_{t_i=t_1}^{t_m} x(t_i)$$

$$\Sigma = \frac{1}{m} \sum_{t_i=t_1}^{t_m} (x(t_i) - \mu)(x(t_i) - \mu)^T$$

2. Utilisation de l'algorithme pour $t > t_m$ :

Etant donné un nouveau pas de temps t, calcul de p(t) :

$$p(t) = \frac{1}{(2\pi)^{\frac{n}{2}}|\Sigma|^{\frac{1}{2}}} exp\, exp\left(-\frac{1}{2}(x(t) - \mu)^T \Sigma^{-1}(x(t) - \mu)\right)$$

On détecte une anomalie si : $p(t) < \epsilon$

Exemple numérique :

On prend le même exemple que ci-dessus avec les valeurs du deuxième pas de temps :

- $x_1(t) = 2.7\ g/m^3$
- $x_2(t) = 85\ g/m^3$

On calcule alors :

$$\mu = \left[2\frac{g}{m^3}, 100\frac{g}{m^3}\right]$$

- $\Sigma$ = [[0.09,-0.2], [-1,25]]

On calcule alors la densité de probabilité suivante :

$$p(t) = \frac{1}{(2\pi)^{\frac{n}{2}}|\Sigma|^{\frac{1}{2}}} exp\, exp\left(-\frac{1}{2}(x(t) - \mu)^T \Sigma^{-1}(x(t) - \mu)\right) = 0.0014 > \epsilon$$

L'algorithme a bien pris en compte la dépendance de la variable $x_1$ par rapport à la variable $x_2$. Le fait d'avoir une concentration en O2 forte peut être expliqué par la concentration faible de polluants en entrée. On ne détecte donc pas d'anomalies.

On présente dans ce qui suit un exemple de mise en oeuvre réalisé dans le cadre d'une station de traitement des eaux en France, où l'on a mis en place une vingtaine de capteurs parmi lesquels ceux listés ci-dessous :

- capteurs de concentration en oxygène dans des bassins
- capteurs de débit d'oxygène injecté
- capteur de pollution carbonée en entrée de bassin (mesure de DCO "Demande Chimique en Oxygène", ici mesurée en laboratoire)
- capteur de solide en surface en entrée de bassin également (mesure de MES "Matières en Suspension", ici mesurée en laboratoire)
- mesures de débit d'effluent en entrée de station

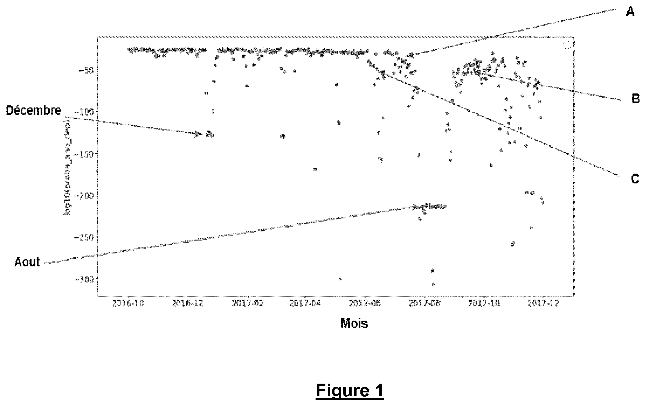

On présente sur le graphe annexé en figure 1 les résultats d'un calcul de probabilité. Représenté en abscisses le mois de la période considérée, et en ordonnées, le logarithme de la densité de probabilité calculé à chaque instant (Ici avec l'algorithme 2). Le logarithme permet d' "écraser les valeurs" pour mieux voir les fortes baisses de probabilités en certain instants.

L'algorithme (le No2) est « entraîné » sur une période de deux mois (novembre et décembre). L'algorithme fournit ensuite la probabilité liée aux valeurs mesurées par les capteurs sur une période d'une année de décembre à décembre.

L'algorithme montre des valeurs de probabilité très basses qui s'expliquent très facilement dans les périodes suivantes :

- des périodes de vacances : fin décembre, mois d'août, différents jours fériés (au mois de mai par exemple)
- une période d'arrêt de la station tout début mars

Mais l'algorithme montre aussi des valeurs très basses dans les périodes suivantes :

- début juillet et tout septembre-octobre. A ce moment-là, il apparaît que le site a vu une formation de mousse dans la station. L'algorithme montre qu'il détecte effectivement une anomalie à cette période.
- déjà début juin, l'algorithme montre des valeurs de probabilité beaucoup plus basses que dans la période d'entraînement. Ces probabilités basses peuvent être expliquées par un changement d'opérateur de la station.

Ces deux derniers événements sont des anomalies très intéressantes à détecter à la fois pour le fournisseur de gaz mais aussi pour le site utilisateur, cela permet par exemple de comprendre une trop forte consommation d'oxygène sur les équipements. Cela pourrait également avoir un intérêt du point de vue de la sécurisation des installations.

En résumé on pointe bien sur la figure les faits suivants :

- en A : une première détection de mousse début juillet
- en B : beaucoup de mousse observée en septembre-octobre
- en C : le fait que ce phénomène aurait pu être anticipé dès juillet, suite à un changement d'opérateur dans la station.

La présente invention concerne alors une méthode d'opération d'une installation de traitement des eaux, qui comporte une phase de détection d'anomalies dans le fonctionnement de la station, se caractérisant en ce que la phase de détection d'anomalies comporte la mise en oeuvre des mesures suivantes :

- on dispose de données représentatives de l'état de fonctionnement de la station, données fournies par des capteurs installés à des endroits choisis de la station elle-même ou au niveau des canalisations d'entrée ou de sortie de la station, ainsi que le cas échéant de données additionnelles situées dans le groupe formé par :

   - i) des données de dates/périodes durant lesquelles le fonctionnement de la station est suivi ;
   - j) des données représentatives de l'état de la machine amont produisant les effluents à traiter dans la station ;
   - k) des données météo caractérisant les conditions climatiques dans lesquelles le fonctionnement de la station est suivi ;

- on dispose d'un système d'acquisition et de traitement de ces données, muni d'un algorithme de traitement de ces données, apte à réaliser les déterminations suivantes :

   a. à réaliser une phase d'apprentissage durant laquelle le système calcule *les paramètres d'une loi de probabilité pour l'ensemble des capteurs* ainsi que le cas échéant desdites données additionnelles ;
   b. à réaliser une phase d'utilisation de l'algorithme où le système insère les valeurs qui sont lues en temps réel par les capteurs dans l'algorithme, pour calculer une densité de probabilité pour l'ensemble des capteurs et selon le résultat de cette densité, si cette probabilité est basse, conclure que les capteurs prennent des valeurs très différentes de celles qu'ils prenaient lors de la phase d'apprentissage, et pointer alors une anomalie.

Selon un mode préféré de mise en oeuvre de l'invention, le système d'acquisition et de traitements de données est également apte à communiquer de la façon suivante :

- il est apte à communiquer avec un système d'informatique dématérialisée/hébergée (« cloud ») ;
- il est apte à transmettre des données (en filaire ou sans fil), agrégées, à un serveur ;
- le serveur est programmé pour recevoir les données, les stocker dans des bases de données, convertir ces données en un format adapté pour la visualisation, et traiter ces données selon des préconisations ;
- les résultats de l'algorithme, ainsi que les données nécessaires au calcul de l'algorithme, sont ainsi disponibles à distance sur un support digital tel que par exemple une tablette, un téléphone, un ordinateur.


**Revendications**

1.  Méthode d'opération d'une installation de traitement des eaux, qui comporte une phase de détection d'anomalies dans le fonctionnement de la station, **se caractérisant en ce que** la phase de détection d'anomalies comporte la mise en oeuvre des mesures suivantes :

   - on dispose de données représentatives de l'état de fonctionnement de la station, données fournies par des capteurs installés à des endroits choisis de la station elle-même ou au niveau des canalisations d'entrée ou de sortie de la station,
   - on dispose également le cas échéant de données additionnelles situées dans le groupe formé par :

      i) des données de dates/périodes durant lesquelles le fonctionnement de la station est suivi ;
      j) des données représentatives de l'état de la machine amont produisant les effluents à traiter dans la station ;
      k) des données météo caractérisant les conditions climatiques dans lesquelles le fonctionnement de la station est suivi ;

   - on dispose d'un système d'acquisition et de traitement de ces données, muni d'un algorithme de traitement de ces données, apte à réaliser les déterminations suivantes :

      a) à réaliser une phase d'apprentissage durant laquelle le système calcule les paramètres d'une loi de probabilité pour l'ensemble des capteurs ainsi que le cas échéant desdites données additionnelles ;
      b) à réaliser une phase d'utilisation de l'algorithme où le système insère les valeurs qui sont lues en temps réel par les capteurs dans l'algorithme, pour calculer une densité de probabilité pour l'ensemble des capteurs et selon le résultat de cette densité, si cette probabilité est basse, conclure que les capteurs prennent des valeurs très différentes de celles qu'ils prenaient lors de la phase d'apprentissage, et pointer alors une anomalie.

**2.** Méthode selon la revendication 1, **se caractérisant en ce que** le système d'acquisition et de traitement est apte :

- à communiquer avec un système d'informatique dématérialisée/hébergée (« cloud ») ;
- à transmettre lesdites données fournies par les capteurs, et le cas échéant lesdites données additionnelles, ainsi que les résultats fournis par l'algorithme, à un serveur distant, le serveur étant lui-même apte à recevoir les données, les stocker dans des bases de données, convertir ces données en un format adapté pour la visualisation, et traiter ces données selon des préconisations, permettant l'accès à distance à ces données et résultats sur un support digital pour toute personne autorisée.

**Figure 1**

Europäisches
Patentamt

European
Patent Office

Office européen
des brevets

# RAPPORT DE RECHERCHE EUROPEENNE

Numéro de la demande

EP 19 30 5357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2017/097647 A1 (LUNANI MAHESH [US] ET AL) 6 avril 2017 (2017-04-06) * alinéas [0054] - [0059], [0118], [0154]; figures 2, 5, 7, 20-23 * ----- | 1,2 | INV. G05B23/02 G06Q50/06 C02F1/00 F04D15/02 |
| A | US 2017/060124 A1 (HARA SATOSHI [JP]) 2 mars 2017 (2017-03-02) * alinéas [0023] - [0032]; revendications 1, 2 * ----- | 1,2 | |
| Y | WO 2019/045699 A1 (SIEMENS AG [DE]) 7 mars 2019 (2019-03-07) * alinéas [0003] - [0005] * ----- | 1,2 | |
| A | EP 0 626 697 A1 (HITACHI LTD [JP]) 30 novembre 1994 (1994-11-30) * abrégé * ----- | 1,2 | |

DOMAINES TECHNIQUES RECHERCHES (IPC)

G05B
G06Q
F04D
C02F

Le présent rapport a été établi pour toutes les revendications

| Lieu de la recherche | Date d'achèvement de la recherche | Examinateur |
|---|---|---|
| Munich | 13 septembre 2019 | Juillot, Olivier J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**EP 3 712 735 A1**

**ANNEXE AU RAPPORT DE RECHERCHE EUROPEENNE
RELATIF A LA DEMANDE DE BREVET EUROPEEN NO.**

EP 19 30 5357

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-09-2019

| Document brevet cité au rapport de recherche | Date de publication | Membre(s) de la famille de brevet(s) | Date de publication |
|---|---|---|---|
| US 2017097647 A1 | 06-04-2017 | AUCUN | |
| US 2017060124 A1 | 02-03-2017 | US 2017060124 A1<br>US 2018329402 A1 | 02-03-2017<br>15-11-2018 |
| WO 2019045699 A1 | 07-03-2019 | AUCUN | |
| EP 0626697 A1 | 30-11-1994 | DE 69404557 D1<br>DE 69404557 T2<br>EP 0626697 A1<br>JP 3147586 B2<br>JP H06331507 A<br>US 5623109 A | 04-09-1997<br>12-03-1998<br>30-11-1994<br>19-03-2001<br>02-12-1994<br>22-04-1997 |

EPO FORM P0460

Pour tout renseignement concernant cette annexe : voir Journal Officiel de l'Office européen des brevets, No.12/82